# EUROPEAN PATENT SPECIFICATION

(11) **EP 2 423 738 B1**
(45) Date of publication and mention of the grant of the patent: **18.05.2016**
(21) Application number: 11006855.8
(22) Date of filing: 22.08.2011
(51) Int. Cl.: G02F 1/13363, G02F 1/1337, G02F 1/1343

(54) **Liquid crystal display element**
Flüssigkristallanzeigeelement
Élément d'affichage à cristaux liquides

(30) Priority: 25.08.2010 JP 2010188687
(43) Date of publication of application: 29.02.2012
(73) Proprietor: Stanley Electric Co., Ltd., Meguro-ku Tokyo (JP)
(72) Inventor: Iwamoto, Yoshihisa, Tokyo 153-8636 (JP)
(74) Representative: Emde, Eric

(56) References cited:
- US-A1- 2001 033 353
- US-A1- 2004 125 276
- US-A1- 2004 165 136

## Description

The present invention relates to a multiplex-driven, vertically aligned type liquid crystal display element.

### BACKGROUND

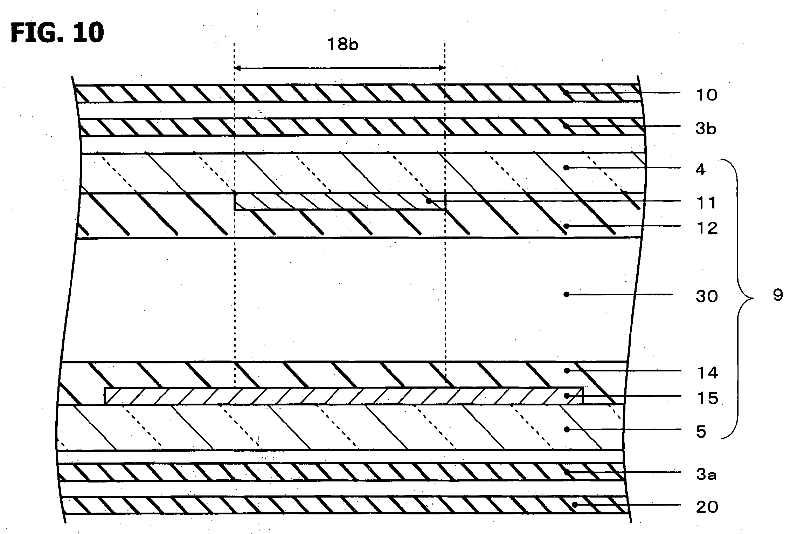

Fig. 10 shows a cross section figure of an example of conventional vertically aligned liquid crystal display. This liquid crystal display element comprises a liquid crystal cell 9, viewing angle compensation plates 3a and 3b provided on both sides of the liquid crystal cell 9, and polarizing plates 10 and 20 that sandwich the liquid crystal cell 9 and the viewing angle compensation plates 3a and 3b. The polarizing plates 10 and 20 are set up in a crossed Nicols arrangement. The liquid crystal cell 9 comprises a liquid crystal layer 30 with a negative dielectric constant anisotropy, Δε, and lower transparent substrates 4 and 5 that sandwich the liquid crystal layer 30. The upper and lower substrates 4 and 5 are provided with upper and lower transparent electrodes 11 and 15, respectively, and vertical alignment films 12 and 14 that are formed to cover the upper and lower electrodes 11 and 15 and are treated by alignment process, respectively.

A display area 18 is defined in a portion where the transparent electrodes 11 and 15 overlap each other, with the liquid crystal layer 30 sandwiched between them. In the zero of applied voltage, the liquid crystal molecules in the liquid crystal layer 30 are oriented nearly vertically to the transparent substrates 4 sand 5, and the refractive index is nearly isotropic in in-plane directions to produce a dark state in the display area 18 when combined with the polarizing plates 10 and 20 in a crossed Nicols arrangement. When a voltage equal to or higher than the threshold voltage of the liquid crystal layer 30 is applied between the transparent electrodes 11 and 15, the liquid crystal molecules in the liquid crystal layer 30 are tilted to the transparent substrates 4 and 5, and the refractive index of liquid crystal layer30 becomes anisotropic in in-plane, allowing the incident light to pass through the polarizing plates 10 and 20 in a crossed Nicols arrangement to produce a light state in the display area 18.

There are some different types of electrode arrangement used to drive liquid crystal display elements, such as segment electrode arrangement (including seven segment display and fixed pattern display) and simple matrix type dot matrix electrode. In the case of a segment electrode arrangement, a segment electrode to define display areas is formed on one of the transparent substrates, while a common electrode of a predefined shape to cover the display areas (or the segmented electrode) is formed on the other transparent substrate. In the case of a simple matrix type dot matrix electrode, characters and numbers are displayed by applying a voltage selectively to appropriate intersections (pixels) between the scanning electrodes formed on one transparent substrate and the signal electrodes formed on the other transparent substrate.

It is generally known that these liquid crystal display elements have good legibility when seen from the perpendicular direction to the substrate, but the transmittance and color may change when seen from an oblique direction from the normal to the substrate.

Japanese Patent No. 2047880 discloses a liquid crystal display element comprising a viewing angle compensation plate having a negative uniaxial optical anisotropy (negative uniaxial film) or a viewing angle compensation plate having a negative biaxial optical anisotropy (negative biaxial film) provided between a polarizing plate and a substrate designed for conventional vertically aligned type liquid crystal display elements.

Japanese Patents No. 3834304 and No. 2947350 disclose a multi-domain vertically aligned type liquid crystal element in which the liquid crystal molecules constituting the liquid crystal layer are oriented in two or more directions.

Japanese Patent No. 2872628 and No. 4641200 disclose an alignment method to produce a nearly vertical alignment film.

US 2004/125276 A1 discloses an LCD having liquid crystal molecules that lie at a predetermined direction around a valley formed in an upper substrate of the LCD in order to prevent creation of an unadjustable disclination line. The LCD comprises an upper substrate, a lower substrate and a plurality of slits formed in a pixel region of the lower substrate. Each of the slits has a minute distance to the adjacent one of the slits. A valley is formed in a color filter of the upper substrate covered with a transparent electrode, and has a predetermined angle with respect to the slits. Vertical alignment material is formed in opposite faces of the upper and lower substrates. A liquid crystal layer is injected between the upper and lower substrates. Polarizers are arranged in outer faces of the upper and lower substrates, and have transmission axes, which are perpendicular to each other.

US 2001/033353 A1 discloses a liquid crystal display device. A first electrode provided in the liquid crystal display device of a vertical alignment mode includes, for each picture element region, a lower conductive layer, a dielectric layer covering the lower conductive layer, and an upper conductive layer provided on one side of the dielectric layer which is closer to a liquid crystal layer. The upper conductive layer includes an upper layer opening, and the lower conductive layer includes a lower layer opening, thus forming first, second and third regions having gradually decreasing electric field strengths. Liquid crystal molecules of the liquid crystal layer in an orientation-regulating region in which the first, second and third regions are arranged in this order in a predetermined direction change the orientation direction thereof so that they are inclined in a single direction in the presence of an applied voltage.

US 2004/165136 A1 discloses a vertically oriented liquid crystal display element of higher quality having almost uniform visibility in any direction attained by improving obliquely viewed visibility. The liquid crystal display element comprises a pair of substrates, transparent electrodes having predetermined patterns formed on the respective substrates, vertical orienting membranes respectively formed on the transparent electrodes and rubbed in a predetermined direction and a liquid crystal layer consisting of the liquid crystal molecules sandwiched by the substrates. The substrates are arranged such that respective transparent electrodes face each other. Series of nearly rectangular slits arse formed on the respective transparent electrodes by removing portions of the electrodes in a display area formed by the electrodes.; Series of the slits on one and other transparent electrodes are alternately arranged in a normal direction to a longitudinal direction of series of the slits, when the substrates are viewed vertically.

### SUMMARY

The object of the invention is to provide a vertically aligned type liquid crystal display element having high display performance.

According to the present invention, a liquid crystal display element having predefined display areas is provided as set forth in claim 1. Preferred embodiments of the present invention may be gathered from the dependent claims.

### BRIEF DESCRIPTION OF DRAWINGS

Fig. 1 depicts a cross section of an example of vertically aligned type liquid crystal display element according to embodiments.
Figs. 2A and 2B are plan views illustrating a typical arrangement of openings formed in the common electrode.
Fig. 2C is a table giving various parameters of samples Sa1 to Sa3 prepared on a trial basis.
Fig. 3 is a graph illustrating the dependence of transmittance characteristics on the observation angle for the samples Sa1 to Sa3 and a reference sample Ref.
Fig. 4 is an x,y chromaticity diagram according to the XYZ colorimetric system illustrating the dependence of the hue on the observation angle for the samples Sa1 to Sa3 and the reference sample Ref.
Fig. 5A is a table giving various parameters of samples Sa4 to Sa6 that have a pretilt angle of 89.0°, 89.5° and 89.9°, respectively.
Fig. 5B is a graph illustrating the dependence of transmittance characteristics on the observation angle for the samples Sa4 to Sa6 and a reference sample Ref.
Fig. 5C is an x,y chromaticity diagram according to the XYZ colorimetric system illustrating the dependence of the hue on the observation angle for the samples Sa4 to Sa6 and the reference sample Ref.
Fig. 6A is a table giving various parameters of samples Sa7 to Sa9 in which rectangular openings are arranged checkerwise at intervals of 57 µm, 107 µm and 157µm, respectively, in the width direction.
Fig. 6B is a graph illustrating the dependence of transmittance characteristics on the observation angle for the samples Sa7 to Sa9 and a reference sample Ref.
Fig. 6C is an x,y chromaticity diagram according to the XYZ colorimetric system illustrating the dependence of the hue on the observation angle for the samples Sa7 to Sa9 and the reference sample Ref.
Figs. 7A and 7B are a schematic figure illustrating the electric field around the edge of an opening under an applied voltage and a front perspective view schematically illustrating oriented molecules at the thickness-direction center of a liquid crystal layer.
Fig. 8 is a cross sectional view illustrating typical deformation of the liquid crystal display element according to the embodiments.
Figs. 9A to 9D are plan views illustrating typical arrangements and shapes of openings formed in an electrode.
Fig. 10 is a cross section figure of an example of conventional vertically aligned type liquid crystal display.
Figs. 11A and 11B illustrate schematic figures of a model of conventional liquid crystal display element studied in the simulation analysis.
Fig. 12A shows the dependence of transmittance characteristics on the observation angle in the first to third conventional liquid crystal display elements.
Fig. 12B is a table that shows x,y chromaticity observations according to the XYZ colorimetric system at an observation angle for the first to third conventional liquid crystal display elements.

### DESCRIPTION OF EMBODIMENTS

The present inventor carried out simulation analysis of conventional vertically aligned type liquid crystal display elements to study the dependence of the transmittance characteristics and hue on the observation direction. LCD MASTER 6.4 supplied by Shintech, Inc., was used for the simulation analysis.

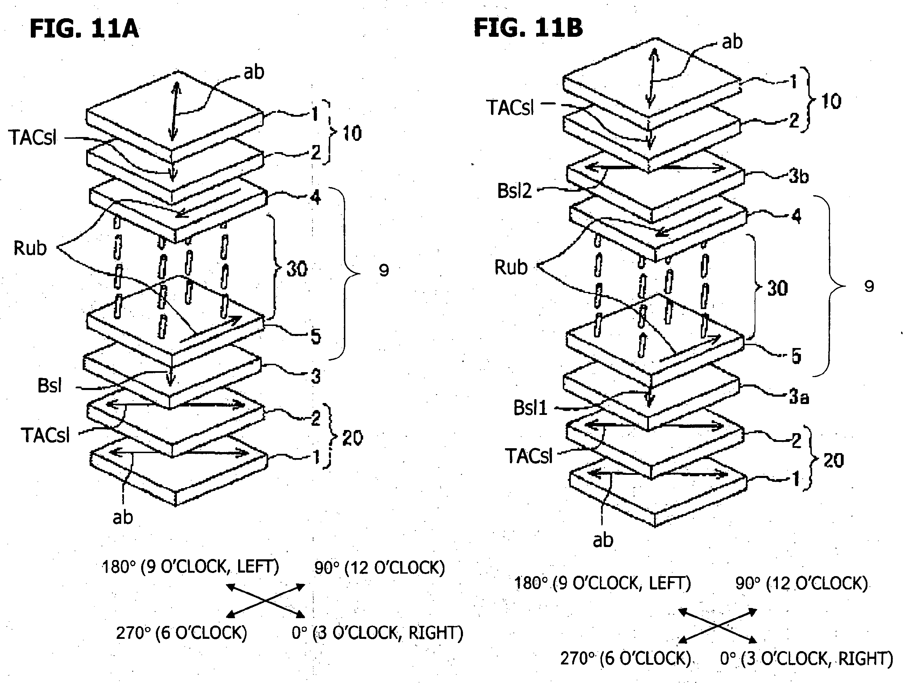

Figs. 11A and 11B illustrate schematic figures of a model of conventional liquid crystal display element used in the simulation analysis.

The first conventional liquid crystal display element depicted in Fig. 11A comprises a liquid crystal cell 9, a viewing angle compensation plate 3 located on one side of the liquid crystal cell 9, and polarizing plates 10 and 20 that sandwich the liquid crystal cell 9 and the viewing angle compensation plate 3. The viewing angle compensation plate 3 is a negative biaxial film with an in-plane phase difference of 50 nm and a thickness-direction phase difference of 440 nm. The polarizing plates 10 and 20 are set up in a crossed Nicols arrangement. The liquid crystal cell 9 is the liquid crystal cell depicted in Fig. 10 and comprises a liquid crystal layer 30 with a Δε of negative and upper and lower transparent substrates 4 and 5 that sandwich the liquid crystal layer 30. The upper and lower substrates 4 and 5 are provided with upper and lower transparent electrodes, respectively, and vertical alignment films treated by alignment process that are formed to cover the upper and lower electrodes, respectively. The upper and lower electrodes and the vertical alignment films expediently aren't depicted in Fig. 11A. The liquid crystal layer 30 has a birefringence, Δn, of about 0.15 and a thickness, d, of about 4 µm. Accordingly, the retardation, Δnd, of the liquid crystal layer 30 is about 600 nm. The liquid crystal molecules constituting the liquid crystal layer 30 have a pretilt angle (angle of inclination of the long axis of the liquid crystal molecules to the substrate plane) or 89.5°.

The upper and lower polarizing plates 10 and 20 each consist of a polarizing layer 1 located on a TAC (triacetyl cellulose) base film 2. Though not depicted, a surface protective film of TAC is provided on the polarizing layer 1. The polarizing plate's TAC layer has an in-plane phase difference of 3 nm, and its slow axis is parallel to the absorption axis of the polarizing plate. The polarizing plate's TAC layer has a thickness-direction phase difference of 50 nm.

In the coordinate system given in Fig. 11A_{,} the rubbing direction, Rub, for the upper substrate 4 is 270°, while the rubbing direction, Rub, for the lower substrate 5 is 90°. The in-plane director direction in the liquid crystal layer 30 (direction of liquid crystal molecule orientation at the thickness-direction center of the liquid crystal layer) is 90°. The absorption axis, ab, of the polarizing layer 1 and the in-plane slow axis in the TAC base film 2, TACsl, in the upper polarizing plate 10 are in the direction of 135°, and those in the lower polarizing plate 20 are in the direction of 45°. The in-plane slow axis, Bsl, in the negative biaxial film 3 is nearly perpendicular to the absorption axis in the adjacent polarizing plate and it is in the direction of 135°.

In the second conventional liquid crystal display element depicted in Fig. 11B, the viewing angle compensation plate 3a provided between the lower substrate 5 and the lower polarizing plate 20 is a negative biaxial film, and the viewing angle compensation plate 3b provided between the upper substrate 4 and the upper polarizing plate 10 is a negative biaxial film. Otherwise, the element is the same as the first conventional liquid crystal display element.

In the coordinate system Fig. 11B, the in-plane slow axis, Bsl1, in the negative biaxial film 3a is nearly perpendicular to the absorption axis, ab, of the polarizing layer 1 in the neighboring polarizing plate 20 and it is in the direction of 135°. The in-plane slow axis, Bsl2, in the negative biaxial film 3b is nearly perpendicular to the absorption axis, ab, of the polarizing layer 1 in the neighboring polarizing plate 10 and it is in the direction of 45°. In both negative biaxial films 3a and 3b, the in-plane phase difference is 25 nm and the thickness direction phase difference is 220 nm.

In a third conventional liquid crystal display element, the viewing angle compensation plate 3a as shown in Fig. 11B is a negative biaxial film with an in-plane phase difference of 50 nm and a thickness-direction phase difference of 220 nm, and the viewing angle compensation plate 3b is a negative uniaxial film (C plate) with an in-plane phase difference of 0 nm and a thickness-direction phase difference of 220 nm. Otherwise, the element is the same as the second conventional liquid crystal display element.

For these first to third conventional liquid crystal display elements, the perpendicular direction to the substrate plane is defined as 0° (front direction), and the direction of 180° . (9 o'clock) or 0° (3 o'clock) in the coordinate system in Figs. 11A and 11B is defined as the left or right direction. Described below is the dependence of the transmittance characteristics and changes in hue on the inclination angle in the left or right direction (observation angle) of the first to third conventional liquid crystal display elements.

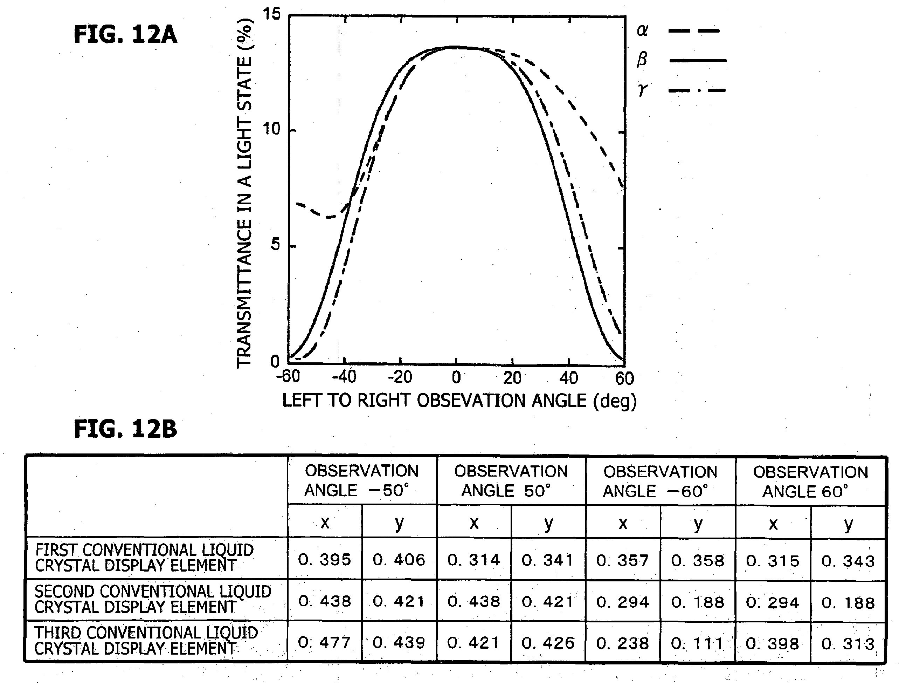

Fig. 12A shows the dependence of transmittance characteristics on the observation angle (-60° to +60°) in the first to third conventional liquid crystal display elements. The horizontal axis of the graph represents the observation angle in units of ° (degrees), and the vertical axis represents the transmittance in a light state in units of %. The curves α, β and γ indicate the transmittance characteristics of the first conventional liquid crystal display element (negative biaxial film on one side), the transmittance characteristics of the second conventional liquid crystal display element (negative biaxial film on both sides), and the transmittance characteristics of the third conventional liquid crystal display element (negative biaxial film on one side, C plate on the other side), respectively. The drive conditions include multiplex driving at 1/16 duty, 1/5 bias and a voltage to produce the maximum contrast. A standard light source D65 is used as the light source.

This graph indicates asymmetry in the dependence of the transmittance characteristics on the observation angle in the case of the first conventional liquid crystal display element. For the second conventional liquid crystal display element, the symmetry in the transmittance characteristics is observed, but a decrease in transmittance at large observation angles is achieved. For the third conventional liquid crystal display element, a decrease in transmittance at large observation angles is observed as in the case of the second conventional liquid crystal display element, and asymmetry in the transmittance characteristics is achieved.

Fig. 12B is a table that shows x,y chromaticity observations according to the XYZ colorimetric system at an observation angle of ±50° or ±60° for the first to third conventional liquid crystal display elements. It is clear from this table that in the case of the second and third conventional liquid crystal display elements, the hue is nearly yellow at an observation angle of ±50° but changes into the range of violet to blue as the observation angle shifts to ±60°.

From these results of simulation analysis, it is evidence that when a viewing angle compensation plate is provided on both sides of the liquid crystal cell as in the case of the second and third conventional liquid crystal display elements, the transmittance considerably decreases and large changes in hue is observed at large observation angles. Such degradation in viewing angle characteristics should preferably be minimized. An investigation by the inventor showed that significant degradation in the viewing angle characteristics was observed when the retardation of the liquid crystal layer became larger than about 450 nm. The inventor carried out study to improve the viewing angle characteristics of a vertically aligned type liquid crystal display element comprising a viewing angle compensation plate provided on both sides of the liquid crystal cell.

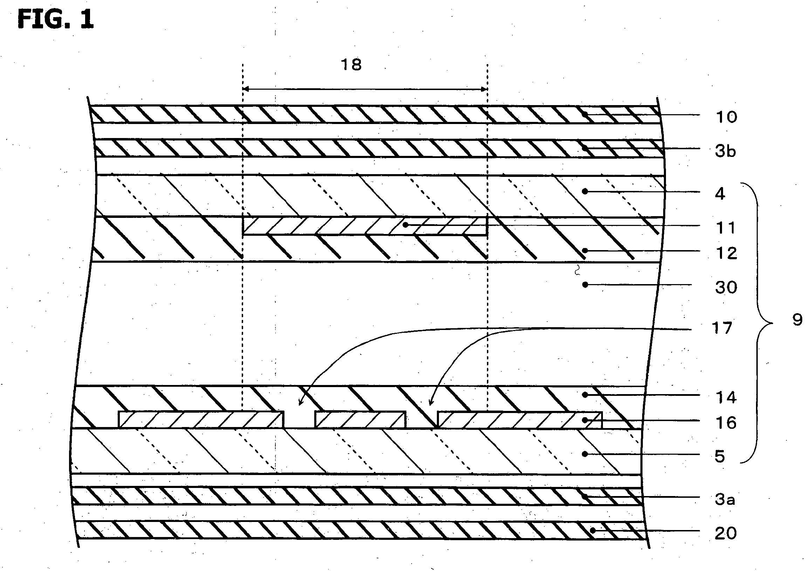

Fig. 1 depicts a cross section of an example of vertically aligned type liquid crystal display element according to embodiments. This liquid crystal display element comprises a liquid crystal cell 9, viewing angle compensation plates 3a and 3b provided on both sides of the liquid crystal cell, and polarizing plates 10 and 20 that sandwich the liquid crystal cell 9 and the viewing angle compensation plates 3a and 3b. The viewing angle compensation plate 3a is a negative biaxial film with an in-plane phase difference of 50 nm and a thickness-direction phase difference of 220 nm. The viewing angle compensation plate 3b is a negative uniaxial film with an in-plane phase difference of 0 nm and a thickness-direction phase difference of 220 nm. The polarizing plates 10 and 20 are set up in a crossed Nicols arrangement. The liquid crystal cell 9 comprises a liquid crystal layer 30 with a Δε of negative and upper and lower transparent substrates 4 and 5 that sandwich the liquid crystal layer 30. The upper and lower substrates 4 and 5 are provided with upper and lower transparent electrodes 11 and 16, respectively, and vertical alignment films 12 and 14 treated by alignment process that are formed to cover the upper and lower electrodes 11 and 16, respectively. The upper electrode 11 is a segment electrode with a shape corresponding to the display area 18, while the lower electrode 16 is a common electrode that contains two or more openings 17 that placed on entire area or display area 18. The liquid crystal layer 30 has a retardation, Δnd, of larger than 450 nm. The relations among the direction of the absorption axis in the polarizing plate, the direction of the slow axis in the viewing angle compensation plate, and the orientation direction or the liquid crystal director arrangement in the liquid crystal layer 30 are the same as in the third conventional liquid crystal display element. The characteristics of the various films and liquid crystal layers are also the same. Thus, the existence/absence of openings in the common electrode is the primary difference between the liquid crystal display element according to the embodiments and the third conventional liquid crystal display element.

Preparation of the vertically aligned type liquid crystal display element according to the embodiments is described below with reference to Fig. 1.

A glass substrate having an ITO (indium tin oxide) transparent electrode with a substrate size of 350 mm x 360 mm, a thickness of 0.7 mm, and a sheet resistance of 80 Ω□ is coated with a positive photoresist (supplied by Rohm and Haas Company) using a roll coater to form a photoresist film. A Cr (chrome) patterned photomask consisting of a quartz blank and a desired Cr (chrome) pattern formed on it is placed on a photoresist film they are closed adherence each other, followed by exposure process of the photoresist film using ultraviolet ray. Pre-bake is carried out at 120°C for 10 minutes, and wet development processing is performed in an aqueous KOH solution to remove the photoresist in the exposed portion. The ITO transparent electrode is etched with a ferric chloride solution at 40°C to remove the ITO film from around the openings in the photoresist film. Finally, the remaining photoresist is removed with an aqueous NaOH solution. In this way, by using an appropriate photomask with a desired pattern, a segment electrode 11 with a desired pattern corresponding to the display area 18 and a common electrode 16 with openings 17 are formed on the upper and lower substrates 4 and 5, respectively. Details of the openings 17 will be described later.

Then, a material solution for the vertical alignment film (supplied by Chisso Petrochemical Corporation) is coated over the segment electrode 11 and the common electrode 16 by the flexographic printing method and pre-baked in a clean oven at 180°C for 30 minutes to form vertical alignment films 12 and 14. Subsequently, each of the films 12 and 14 is rubbed.

Then, either of the upper substrate 4 or the lower substrate 5 on which the vertical alignment film 12 or 14 has been formed is coated with a sealant (supplied by Mitsui Chemicals, Inc.) containing a silica spacer with a particle diameter of 2 to 6 µm by the screen printing method to form an intended pattern. A plastic spacer with a particle diameter of 2 to 6 µm is scattered over the other substrate by the dry spraying method. The upper and lower substrates 4 and 5 are bonded with each other after being set up so that the vertical alignment films 12 and 14 are faced with each other with the rubbing directions in the vertical alignment films 12 and 14 being anti-parallel to each other. Baking is carried out under a required pressure, followed by cutting to an intended size to complete an empty cell. The cell thickness is about 4 µm in the embodiments.

Then, a liquid crystal material (supplied by Merk & Co., Inc.) with a dielectric constant anisotropy of Δε < 0 and a birefringence of Δn = 0.15 is injected in the empty cell by vacuum injection, followed by sealing. Subsequently, baking is carried out at 120° for 60 minutes, followed by washing with a neutral detergent to complete a liquid crystal cell 9.

Finally, viewing angle compensation plates 3a and 3b are formed outside the liquid crystal cell 9, and upper and lower polarizing plates 10 and 20 (SHC13U supplied by Polatechno Co., Ltd.) are provided outside the former plates in such a way that their absorption axes are nearly in a crossed Nicols arrangement. In the present embodiments, a negative biaxial film with an in-plane phase difference of 55 nm and a thickness-direction phase difference of 220 nm is used as the viewing angle compensation plate 3a, and a negative uniaxial film with a thickness-direction phase difference of 220 nm is used as the viewing angle compensation plate 3b.

Thus, a vertically aligned type liquid crystal display element having viewing angle compensation plates and having openings in the electrodes is completed.

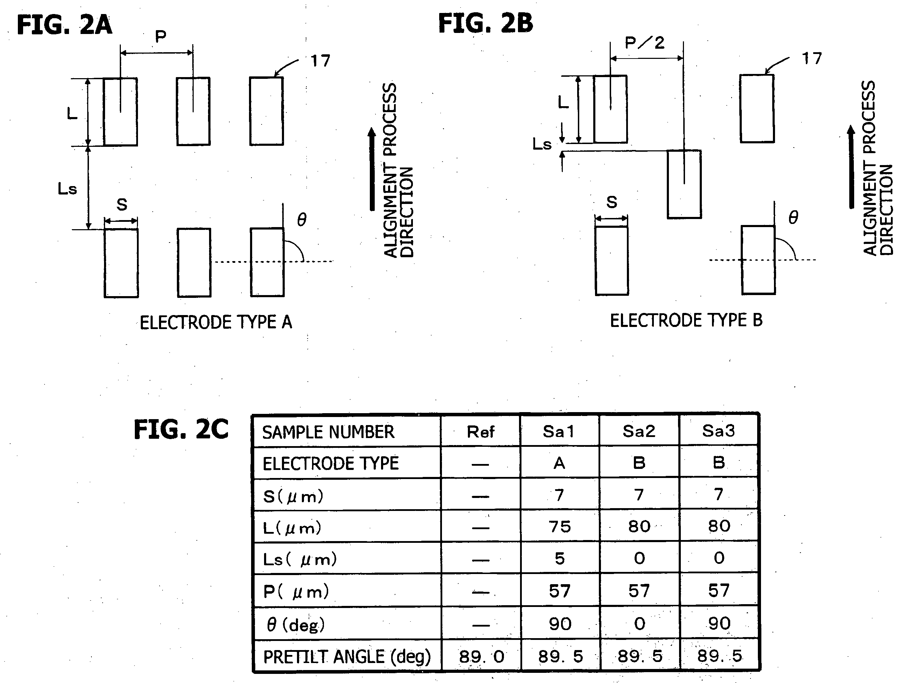

Figs. 2A and 2B are plan views illustrating a typical arrangement of openings formed on the common electrode. Fig. 2C is a table giving various parameters of samples Sa1 to Sa3 prepared on a trial basis. Figs. 2A and 2B illustrate the openings 17, which has a rectangular shape extended in one direction, where L denotes the size of each opening 17 in the length direction, Ls the distance between adjacent openings 17 in the length direction, S the size of each opening 17 in the width direction, and P the intervals of the openings 17 in the width direction. Furthermore, θ represents the angle of the length of the rectangular openings 17 to the left and right direction (to the direction perpendicular to the liquid crystal director) in the liquid crystal display element. Fig. 2A depicts a type A common electrode in which rectangular openings 17 are arranged in a grid-like pattern, and Fig. 2B depicts a type B common electrode in which rectangular openings 17 are arranged checkerwise. Details of the samples Sa1 to Sa3, which differ in terms of various parameters relating to the openings 17, are given in Fig. 2C.

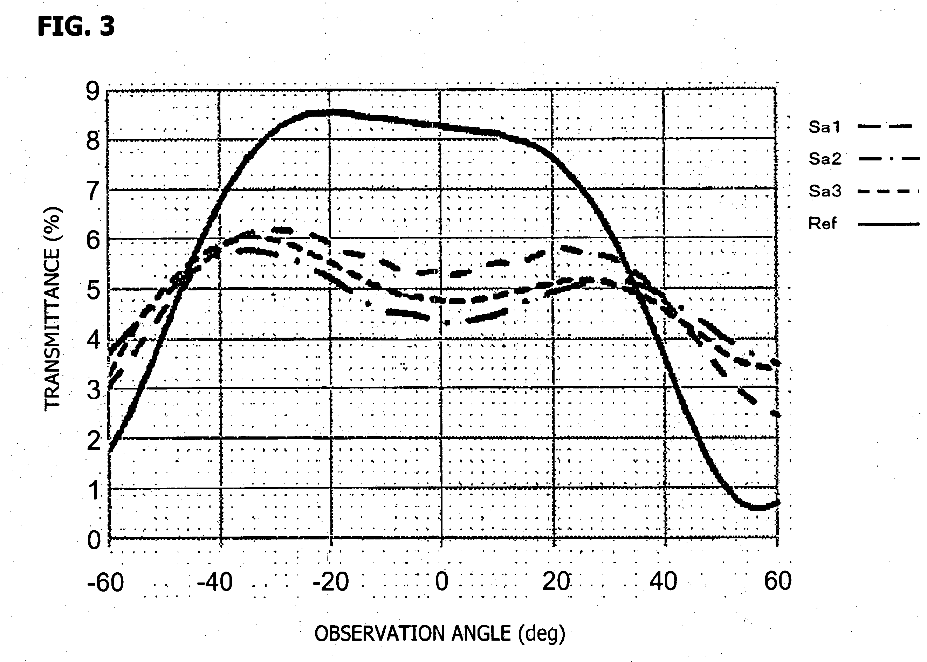

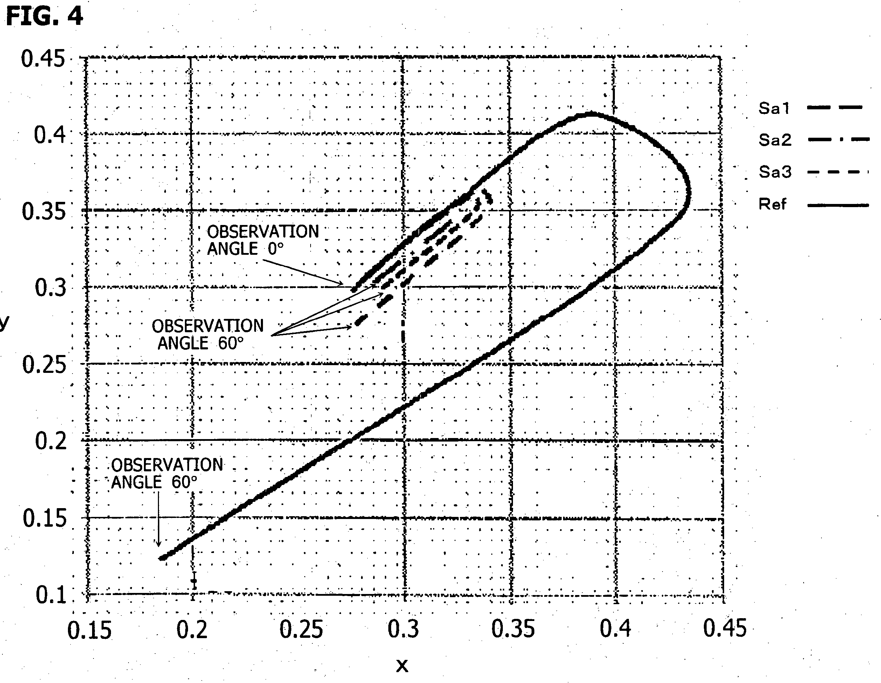

Fig. 3 is a graph illustrating the dependence of transmittance characteristics on the observation angle (-60° to +60°) for the samples Sa1 to Sa3 and a reference sample Ref. Fig. 4 is an x,y chromaticity diagram according to the XYZ colorimetric system illustrating the dependence of the hue on the observation angle (0° to +60°) for the samples Sa1 to Sa3 and the reference sample Ref. Here, the reference sample Ref has the same structure as the above-mentioned third conventional liquid crystal display element with a pretilt angle of 89.0°. The samples Sa1 to Sa3 and the reference sample Ref were multiplex-driven under the conditions of 200Hz frame frequency, 1/9duty, 1/4 bias, and a voltage that gives the maximum contrast.

It is observed in Fig. 3 that the transmittance in the case of observation from the front direction (observation angle 0°) is lower for the samples Sa1 to Sa3 than for the reference sample Ref. This is considered to be because the samples Sa1 to Sa3 have openings in the common electrode to reduce the effective aperture ratio. For all of the samples Sa1 to Sa3, however, the transmittance improves at large observation angles, making the shape of the transmittance characteristics curves considerably flat as a whole.

In Fig. 4, the hue of the reference sample Ref largely changes from white to yellow and then blue as the observation angle shifts from 0° to 60°. For the samples Sa1 to Sa3, on the other hand, the changes in hue are obviously smaller in all cases.

These results indicate that for a vertically aligned type liquid crystal display element having a viewing angle compensation plate on both sides of the liquid crystal cell, the formation of openings in the electrodes serves to reduce the dependence of the transmittance characteristics on the observation angle and also reduce the changes in hue on the observation angle, thus leading to improved viewing angle characteristics. The inventor carried out a continued study for evaluation of the influence of the pretilt angle and the intervals of the openings in the width direction in a vertically aligned type liquid crystal display element having viewing angle compensation plates and having openings in the electrodes.

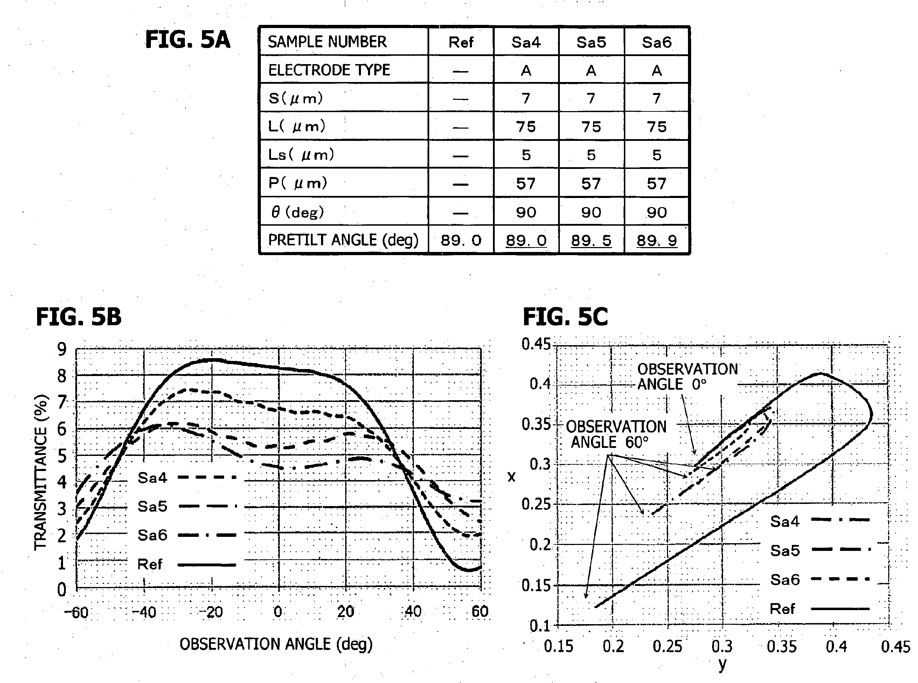

Fig. 5A is a table giving various parameters of samples Sa4 to Sa6 that have a pretilt angle of 89.0°, 89.5° and 89.9°, respectively. Fig. 5B is a graph illustrating the dependence of transmittance characteristics on the observation angle for the samples Sa4 to Sa6 and a reference sample Ref. Fig. 5C is an x,y chromaticity diagram according to the XYZ colorimetric system illustrating the dependence of the hue on the observation angle for the samples Sa4 to Sa6 and the reference sample Ref. It is clear from the graphs that for all of the samples Sa4 to Sa6, the transmittance characteristics curves become flatter and the changes in hue become smaller than for the reference sample Ref. With respect to the influence of the pretilt angle, it is found that the transmittance at large observation angles improves and the changes in hue decrease with an increasing pretilt angle.

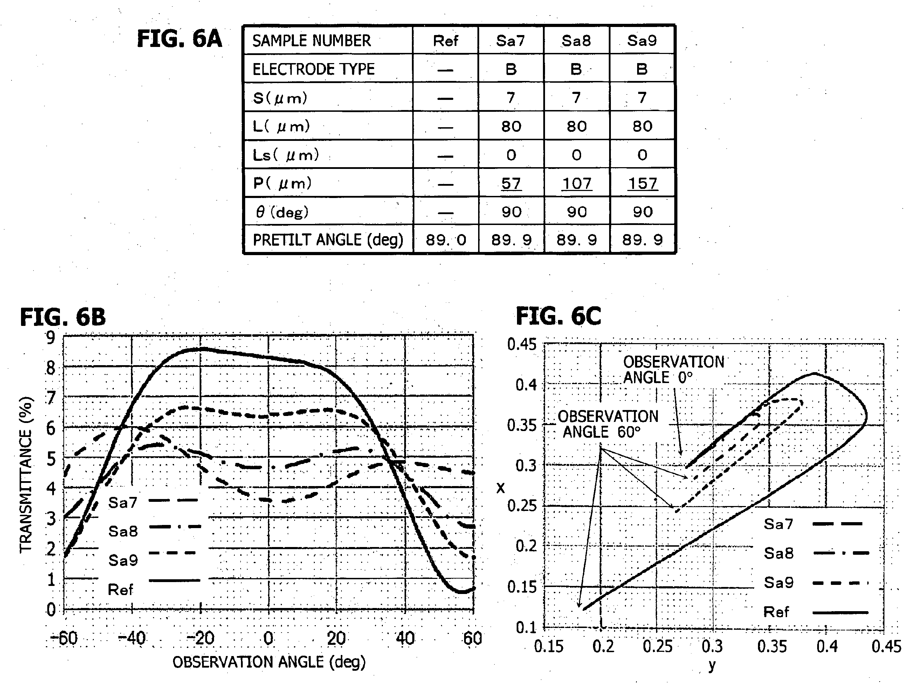

Fig. 6A is a table giving various parameters of samples Sa7 to Sa9 in which rectangular openings are arranged checkerwise at intervals of 57 µm, 107 µm and 157µm, respectively, in the width direction. Fig. 6B is a graph illustrating the dependence of transmittance characteristics on the observation angle for the samples Sa7 to Sa9 and a reference sample Ref. Fig. 6C is an x,y chromaticity diagram according to the XYZ colorimetric system illustrating the dependence of the hue on the observation angle for the samples Sa7 to Sa9 and the reference sample Ref. It is clear from the graphs that for all of the samples Sa7 to Sa9, the transmittance characteristics curves become flatter and the changes in hue become smaller than for the reference sample Ref. With respect to the influence of the intervals of the openings in their width direction, it is found that the transmittance at large observation angles improves and the changes in hue decrease with decreasing intervals of the openings in their width direction.

Discussed below is the mechanism of the improvement in viewing angle characteristics brought about by the formation of openings in the electrodes in a vertically aligned type liquid crystal display element having a viewing angle compensation plate on both sides of the liquid crystal cell.

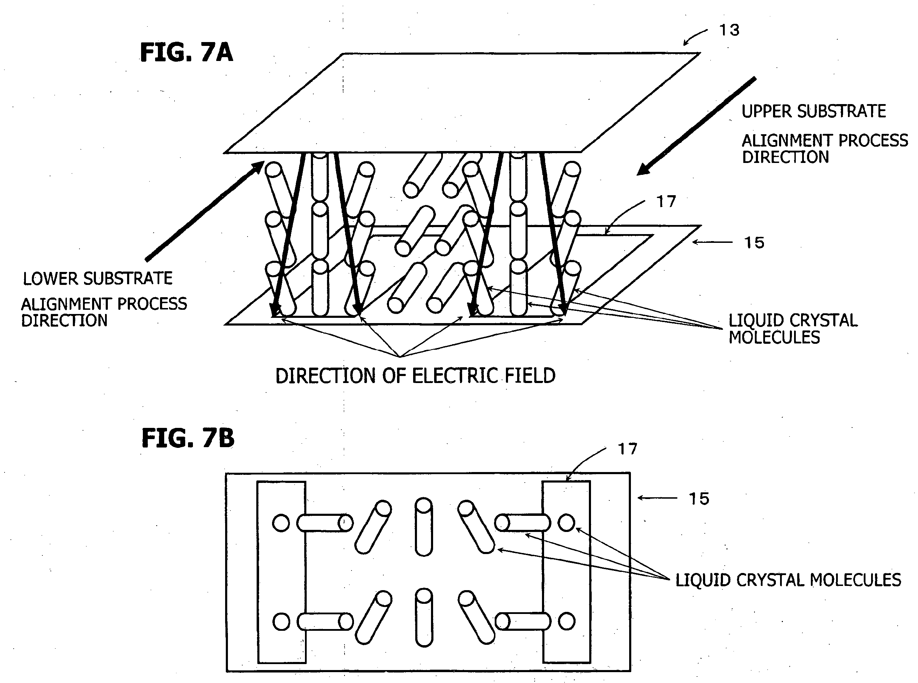

Figs. 7A and 7B are a schematic figure illustrating the electric field around the edge of an opening under an applied voltage and a front perspective view schematically illustrating oriented molecules at the thickness-direction center of a liquid crystal layer. In the absence of applied voltage, liquid crystal molecules with a negative dielectric constant anisotropy are oriented nearly vertically to the substrate. When a voltage is applied between the electrodes, liquid crystal molecules are reoriented in the alignment direction to produce a light state in regions where an electrode exists on both the upper and lower substrates. On the other hand, liquid crystal molecules are not reoriented, failing to produce a light state, in the central region of the opening where an electrode exists only on the upper substrates. Thus, it is considered that the effective aperture ratio decreases and the transmittance also decreases in the case of observation from the front direction as a result of the formation of openings in the electrodes. Around the edge of an opening, on the other hand, the electric flux lines coming from the portions of the electrodes opposite to each other around the opening are directed towards the edge of the opening, leading to oblique electric fields as depicted in Fig. 7A. The liquid crystal molecules located around the edge of the opening are reoriented locally along these oblique electric fields. On the substrate plane, the orientation direction of the liquid crystal molecules gradually comes closer to the alignment direction at positions away from the edge of the opening, possibly resulting in multi-domain orientation in the liquid crystal layer under an applied voltage as seen in Fig. 7B. Noted that in Figs. 7A and 7B, the oblique electric fields and the liquid crystal molecule orientation direction around the edge of the opening are depicted only for their components perpendicular to the alignment direction, but actually a similar phenomenon must be taking place at other edge regions of openings. Thus, it is considered that the formation of openings in the electrodes leads to oblique electric fields around the edge of each opening to cause multi-domain orientation in the liquid crystal layer, resulting in averaged refractive index changes over a range of observation directions and improved viewing angle characteristics.

As discussed above, it appears to be preferable that in the case where importance is given to improvement in the viewing angle characteristics at large observation angles, the size of the openings in the length direction is increased in the alignment direction while the size of the openings in the width direction and their intervals in the width direction are reduced to increase their density, in order to increase the size of the multi-domain orientation regions in the liquid crystal layer. In this case, the above results of evaluation relating to the intervals in the width direction suggest that the intervals in the width direction should preferably be 150 µm or less.

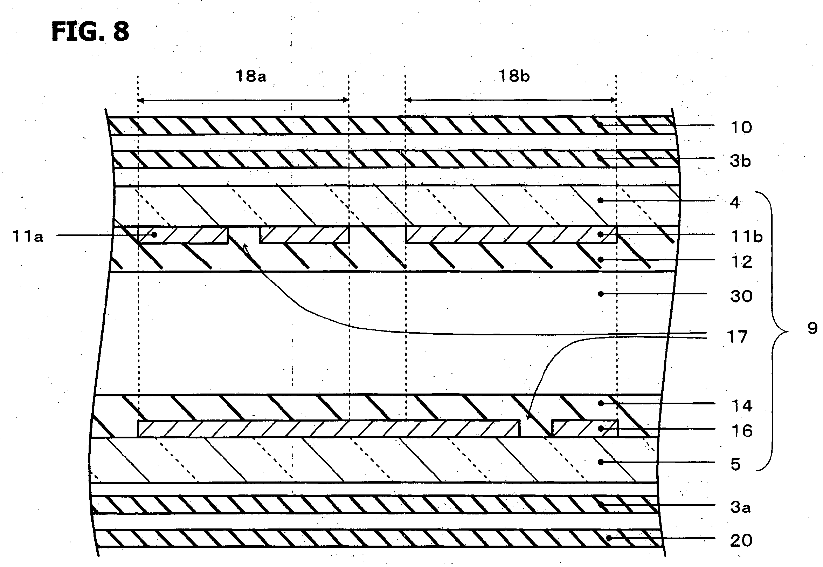

Fig. 8 is a cross sectional view illustrating typical deformation of the liquid crystal display element according to the embodiments. As described for the embodiments, openings may be formed over the entire common electrodes or only in the regions of the common electrodes corresponding to the display areas. Or, they may be formed in the segment electrodes instead of the common electrodes, or may be formed in both the common electrodes and segment electrodes. When openings are formed only in the regions of the common electrodes corresponding to the display areas, the upper and lower substrates should be combined accurately so that the openings come in the display areas. Similarly, the upper and lower substrates should also be combined accurately in the case where openings are formed in both the common electrodes and the segment electrodes. In this respect, it is preferable that openings are formed all over the common electrodes or over the entire portion of the segment electrodes that corresponds to the display areas. Furthermore, in the case of a segment display type liquid crystal display device that has two or more display areas such as 18a and 18b in Fig. 8 to show certain characters and symbols, openings 17 may be formed, for instance, in the segment electrodes 11a in the first display areas 18a while forming another openings 17 in the common electrodes 16 in the second display areas 18b.

The openings may be of other shapes instead of rectangle, and they may be arranged in other ways instead of grid-like or checker-like.

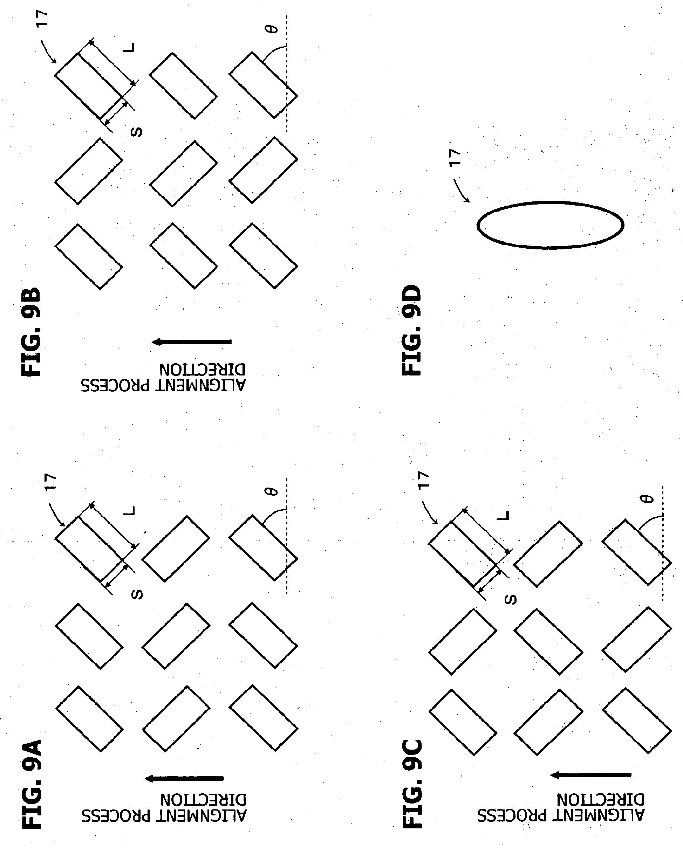

Figs. 9A to 9D are plan views illustrating typical arrangements and shapes of openings formed in an electrode. In Fig. 9A, rectangular openings with their length direction tilted at an angle θ of 45° aligned in the horizontal direction and those tilted at an angle θ of 135° aligned in the horizontal direction are arrayed alternately. In Fig. 9B, rectangular openings with their length direction tilted at an angle 6 of 45° aligned in the vertical direction and those tilted at an angle θ of 135° aligned in the vertical direction are arrayed alternately. In Fig. 9C, rectangular openings with their length direction tilted at an angle θ of 45° and those tilted at an angle θ of 135° are arranged alternately in both the horizontal and vertical directions. These arrangements of openings are also expected to serve to produce multi-domain orientation in the liquid crystal layer, leading to equivalent viewing angle characteristics to those in the embodiments. The openings 17 may have an elliptical shape, instead of rectangular, as depicted in Fig. 9D.

The embodiments use a negative uniaxial film on one side of the liquid crystal cell and a negative biaxial film on the other side of the liquid crystal cell, but this invention is not limited thereto. A negative uniaxial film may be provided on both sides of the liquid crystal cell, or a negative biaxial film may be provided on both sides. The viewing angle compensation plate provided on one side of the liquid crystal cell and the viewing angle compensation plate provided on the other side may have different optical characteristics. The present inventor has confirmed that such a liquid crystal display element has better viewing angle characteristics than conventional liquid crystal display elements. The viewing angle compensation plate provided on one side of the liquid crystal cell and the viewing angle compensation plate provided on the other side may have equivalent optical characteristics. The present inventor has also confirmed that such a liquid crystal display element has better the symmetry in the viewing angle characteristics than conventional liquid crystal display elements.

It is known that in general, the thickness-direction phase difference in a viewing angle compensation plate is preferably about 0.5 to 1 times the retardation in the liquid crystal layer. Then two or more viewing angle compensation plates may be used to adjust the thickness-direction phase difference in cases where the retardation would be too large.

All examples and conditional language recited herein are intended for pedagogical purposes to aid the leader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present invention have been described in detail, it should be understood that the various changes, substitutions, and alterations could be made hereto without departing from the scope of the invention as defined by the appended claims.

## Claims

1. A liquid crystal display element having predefined display areas comprising:
a first and a second transparent substrate disposed opposite to each other;
first and second transparent electrodes disposed on the opposed face of the first and the second transparent substrate, respectively;
a first and a second vertical alignment film disposed on the opposed side of the first and the second transparent substrate to cover the first and the second electrodes, respectively;
a liquid crystal layer disposed between the opposed side of the first and the second transparent substrate and having a negative dielectric constant anisotropy and a retardation of more than 450 nm;
a first and a second viewing angle compensation plate disposed on the unopposed, side of the first and the second transparent substrate, respectively; and
a first and a second polarizing plate disposed in a nearly crossed Nicols arrangement outside the first and the second viewing angle compensation plate, respectively;
wherein:
at least either one of the first and the second vertical alignment film treated by an alignment process in a first direction; and
first partial regions in either one of the first and the second transparent electrodes corresponding to said display areas are provided with elliptical or rectangular openings extending with their length-direction in a direction non-perpendicular to the first direction, one of the openings being defined as a first opening, another opening, adjacent to the first opening and having the same shape as the first opening, with its length-direction extending in a direction crossing the first direction being defined as a second opening;
second partial regions in the other of the first and the second transparent electrodes facing the first partial regions are flat;
the liquid crystal layer is constituted by liquid crystal molecules which orient almost vertically to the first and the second vertical alignment films when voltage is not applied to the liquid crystal layer; **characterized in that**
in the liquid crystal molecules located in the middle of the liquid crystal layer in a thickness direction of the liquid crystal layer and located in an interval region between the first and the second openings when voltage is applied to the liquid crystal layer via the first and second transparent electrodes,
the liquid crystal molecules located near the center of the interval region incline along the first direction,
the liquid crystal molecules located near an edge of the first opening incline toward the first opening, and
the liquid crystal molecules located near an edge of the
second opening incline toward the second opening;
wherein said two or more openings are disposed in a grid-like or checker-like pattern.

2. A liquid crystal display element as claimed in claim 1 wherein said two or more openings are aligned at intervals of 150 µm or less in their width direction.

3. A liquid crystal display element as claimed in claim 1 wherein the pretilt angle measured from the transparent substrate plane in said liquid crystal layer is 89° or more and less than 90°.

4. A liquid crystal display element as claimed in claim 1 wherein said first viewing angle compensation plate is a viewing angle compensation plate having a negative biaxial optical anisotropy, and the slow axis of said first viewing angle compensation plate is perpendicular to the absorption axis of said first polarizing plate that is adjacent to the former and at an angle of about 45° from said first direction.

5. A liquid crystal display element as claimed in claim 1 wherein said first and said second viewing angle compensation plate are viewing angle compensation plates having a negative biaxial optical anisotropy and the in-plane slow axes of said first and said second viewing angle compensation plate are perpendicular to each other, also perpendicular to the absorption axes of said first and said second polarizing plate that are adjacent to the former, and at an angle of about 45° from said first direction.

6. A liquid crystal display element as claimed in claim 1 wherein the thickness-direction phase difference in said first and said second viewing angle compensation plate is 0.5 to 1 times the retardation in said liquid crystal layer.

7. A liquid crystal display element as claimed in any of claims 1 to 6 wherein:
said display areas comprise first display areas and second display areas;
and said openings are formed in regions that correspond to said first display areas in said first transparent electrodes and also formed in regions that correspond to said second display areas in said second transparent electrodes.

## Patentansprüche

1. Flüssigkristallanzeigeelement mit vordefinierten Anzeigebereichen, das Folgendes aufweist:
ein erstes und ein zweites lichtdurchlässiges bzw. transparentes Substrat, die gegenüberliegend zu einander angeordnet sind;
erste und zweite transparente Elektroden, die auf den gegenüberliegenden Flächen des ersten bzw. des zweiten transparenten Substrats angeordnet sind;
einen ersten und einen zweiten Film zur vertikalen Ausrichtung, der auf der gegenüberliegenden Seite des ersten und des zweiten transparenten Substrats angeordnet ist, um die ersten bzw. die zweiten Elektroden abzudecken;
eine Flüssigkristallschicht, die zwischen den gegenüberliegenden Seiten des ersten und des zweiten transparenten Substrats angeordnet ist und einer negativen Anisotropie der dielektrischen Konstante und eine Verzögerung bzw. Retardation von mehr als 450nm aufweist;
eine erste und eine zweite Betrachtungswinkelkompensationsplatte, die auf der nicht gegenüberliegenden Seite des ersten bzw. des zweiten transparenten Substrats angeordnet ist; und
eine erste und eine zweite Polarisationsplatte, die in einer nahezu gekreuzten Nicols-Anordnung außerhalb der ersten bzw. der zweiten Betrachtungswinkelkompensationsplatte angeordnet sind;
wobei:
zumindest einer der ersten und der zweiten Filme zur vertikalen Ausrichtung durch einen Ausrichtungsprozess in einer ersten Richtung behandelt ist; und
erste Teilbereiche in irgendeiner der ersten und der zweiten transparenten Elektroden, die den Anzeigebereichen entsprechen, mit elliptischen oder rechteckigen Öffnungen vorgesehen sind, die sich mit ihrer Längsrichtung in einer Richtung nicht senkrecht zu der ersten Richtung erstrecken, wobei eine der Öffnungen als eine erste Öffnung definiert ist, wobei eine andere Öffnung, die sich benachbart zu der ersten Öffnung befindet und die gleiche Form wie die erste Öffnung aufweist, mit ihrer Längsrichtung in einer Richtung erstreckt, die die erste Richtung kreuzt, als eine zweite Öffnung definiert ist;
zweite Teilbereiche, die in der anderen der ersten und zweiten transparenten Elektroden zu den ersten Teilbereichen weisen, flach sind;
die Flüssigkristallschicht durch Flüssigkristallmoleküle gebildet wird, die sich fast vertikal zu den ersten und den zweiten Filmen zur vertikalen Ausrichtung ausrichten, wenn keine Spannung an die Flüssigkristallschicht angelegt wird;
**dadurch gekennzeichnet, dass**
in den Flüssigkristallmolekülen, die in der Mitte der Flüssigkristallschicht in einer Dickenrichtung der Flüssigkristallschicht gelegen sind und die in einem Intervallbereich zwischen den ersten und den zweiten Öffnungen gelegen sind, wenn Spannung über die erste und zweite transparente Elektrode an die Flüssigkristallschicht angelegt wird,
die Flüssigkristallmoleküle, die nahe der Mitte des Intervallbereichs gelegen sind, sich entlang der ersten Richtung neigen,
die Flüssigkristallmoleküle, die nahe einer Kante der ersten Öffnung gelegen sind, sich zu der ersten Öffnung hin neigen; und
die Flüssigkristallmoleküle, die nahe einer Kante der zweiten Öffnung gelegen sind, sich zu der zweiten Öffnung hin neigen;
wobei die zwei oder mehr Öffnungen in einem gitterartigen oder schachbrettartigen Muster angeordnet sind.

2. Flüssigkristallanzeigeelement gemäß Anspruch 1, wobei die zwei oder mehr Öffnungen mit Intervallen von 150 µm oder weniger in der breiten Richtung ausgerichtet sind.

3. Flüssigkristallanzeigeelement gemäß Anspruch 1, wobei der Vorneigungswinkel, der von der Ebene des transparenten Substrats in der Flüssigkristallschicht gemessen wird, 89° oder mehr und weniger als 90° beträgt.

4. Flüssigkristallanzeigeelement gemäß Anspruch 1, wobei die erste Betrachtungswinkelkompensationsplatte eine Betrachtungswinkelkompensationsplatte mit einer negativen, biaxialen, optischen Anisotropie ist, und die Slow-Axis der Betrachtungswinkelkompensationsplatte senkrecht zur Absorptionsachse der ersten Polarisationsplatte ist, die sich benachbart zur ersteren und mit einem Winkel von ungefähr 45° zu der ersten Richtung befindet.

5. Flüssigkristallanzeigeelement gemäß Anspruch 1, wobei die erste und die zweite Betrachtungswinkelkompensationsplatten Betrachtungswinkelkompensationsplatten mit einer negativen, biaxialen, optischen Anisotropie sind und die Slow-Axes in der Ebene der ersten und der zweiten Betrachtungswinkelkompensationsplatten senkrecht zueinander sind, ebenfalls senkrecht zu den Absorptionsachsen der ersten und der zweiten Polarisationsplatte sind, die benachbart zu ersteren sind, und sich bei einem Winkel von ungefähr 45° zu der ersten Richtung befinden.

6. Flüssigkristallanzeigeelement gemäß Anspruch 1, wobei die Phasendifferenz in der Dickenrichtung in den ersten und zweiten Betrachtungswinkelkompensationsplatten 0,5 bis 1 Mal der Retardation in der Flüssigkristallschicht entspricht.

7. Flüssigkristallanzeigeelement gemäß einem der Ansprüche 1 bis 6, wobei:
die Anzeigebereiche erste Anzeigebereiche und zweite Anzeigebereiche aufweisen; und
die Öffnungen in Bereichen geformt sind, die den ersten Anzeigebereichen in den ersten transparenten Elektroden entsprechen und ebenfalls in Bereichen gebildet sind, die den zweiten Anzeigebereichen in den zweiten transparenten Elektroden entsprechen.

## Revendications

1. Élément d'affichage à cristaux liquides comportant des régions d'affichage prédéfinies comprenant :
des premier et deuxième substrats transparents disposésface à face ;
des première et deuxième électrodes transparentes disposées sur les faces opposées des premier et deuxième substrats transparents, respectivement ;
des premier et deuxième films d'alignement vertical disposés sur les côtés opposésdes premier et deuxième substrats transparents pour couvrir les première et deuxième électrodes, respectivement ;
une couche de cristaux liquides disposée entre les côtés opposés des premier et deuxième substrats transparents et ayant une anisotropie de constante diélectrique négative et un retard supérieur à 450 nm ;
des première et deuxième plaques de compensation d'angle de vision disposées sur les côtés non opposés des premier et deuxième substrats transparents, respectivement ; et
des première et deuxième plaques de polarisation disposées selon un agencement de Nicolspresque croisé à l'extérieur des première et deuxième plaques de compensation d'angle de vision, respectivement ;
dans lequel :
au moins l'un ou l'autre des premier et deuxième films d'alignement vertical est traité par un processus d'alignement dans une première direction ; et
des premières régions partielles dans l'une ou l'autre des première et deuxième électrodes transparentes correspondant aux régions d'affichage sont munies d'ouvertures elliptiques ou rectangulaires s'étendant de telle sorte que leur direction de longueur est dans une direction non perpendiculaire à la première direction, l'une des ouvertures étant définie comme étant une première ouverture, et une autre ouverture, adjacente à la première ouverture, ayant la même forme que la première ouverture, ayant sa direction de longueur s'étendant dans une direction coupant la première direction, étant définie comme étant une deuxième ouverture ;
des deuxièmes régions partielles dans l'autre des première et deuxième électrodes transparentes, faisant face aux premières régions partielles, sont plates ;
la couche de cristaux liquides est constituée de molécules de cristaux liquides qui s'orientent presque verticalement par rapport aux premier et deuxième films d'alignement vertical lorsqu'aucune tension n'est appliquée à la couche de cristaux liquides ; **caractérisé en ce que**
dans les molécules de cristaux liquides situées au milieu de la couche de cristaux liquides dans le sens de l'épaisseur de la couche de cristaux liquides et situées dans une région d'intervalle entre les première et deuxième ouvertures lorsqu'une tension est appliquée à la couche de cristaux liquides par l'intermédiaire des première et deuxième électrodes transparentes,
les molécules de cristaux liquides situées près du centre de la région d'intervalle s'inclinent suivant la première direction,
les molécules de cristaux liquides situées près d'un bord de la première ouverture s'inclinent en direction de la première ouverture, et
les molécules de cristaux liquides situées près d'un bord de la deuxième ouverture s'inclinent en direction de la deuxième ouverture ;
dans lequel lesdites deux, ou plus, ouvertures sont disposées selon un motif de grille ou de damier.

2. Élément d'affichage à cristaux liquides selon la revendication 1, dans lequel lesdites deux, ou plus, ouvertures sont alignées avec des intervalles de 150 µs ou moins dans leur direction de largeur.

3. Élément d'affichage à cristaux liquides selon la revendication 1, dans lequel l'angle de pré-inclinaison mesuré par rapport au plan du substrat transparent dans la couche de cristaux liquides est supérieur ou égal à 89° et inférieur à 90°.

4. Élément d'affichage à cristaux liquides selon la revendication 1, dans lequel la première plaque de compensation d'angle de vision est une plaque de compensation d'angle de vision ayant une anisotropie optique biaxiale négative, et l'axe lent de la première plaque de compensation d'angle de vision est perpendiculaire à l'axe d'absorption de la première plaque de polarisation qui est adjacente à celle-ci et avec un angle d'environ 45° par rapport à la première direction.

5. Élément d'affichage à cristaux liquides selon la revendication 1, dans lequel les première et deuxième plaques de compensation d'angle de vision sont des plaques de compensation d'angle de vision ayant une anisotropie optique biaxiale négative et les axes lents dans le plan des première et deuxième plaques de compensation d'angle de vision sont perpendiculaires entre eux, aussi perpendiculaires aux axes d'absorption des première et deuxième plaques de polarisation qui sont adjacentes à celles-ci, et avec un angle d'environ 45° par rapport à la première direction.

6. Élément d'affichage à cristaux liquides selon la revendication 1, dans lequel la différence de phase dans le sens de l'épaisseur dans les première et deuxième plaques de compensation d'angle de vision est égale à 0,5 à 1 fois le retard dans la couche de cristaux liquides.

7. Élément d'affichage à cristaux liquides selon l'une quelconque des revendications 1 à 6, dans lequel :
les régions d'affichage comprennent des premières régions d'affichage et des deuxièmes régions d'affichage ;
et les ouvertures sont formées dans des régions qui correspondent aux premières régions d'affichage dans les premières électrodes transparentes et formées aussi dans des régions qui correspondent aux deuxièmes régions d'affichage dans les deuxièmes électrodes transparentes.
